# EUROPEAN PATENT APPLICATION

(11) **EP 1 460 841 A1**
(43) Date of publication of application: **22.09.2004**
(21) Application number: 03100701.6
(22) Date of filing: 19.03.2003
(51) Int. Cl.: H04N 5/74

(54) **Method of preventing making of unauthorized recordings**

(71) Applicant: Koninklijke Philips Electronics N.V., 5621 BA Eindhoven (NL)
(72) Inventor: The designation of the inventor has not yet been filed
(74) Representative: Schmitz, Herman Jan Renier

(57) **Abstract**

In order to prevent people from making unauthorized recordings of visual events (cinema movies, live concerts, museum exhibitions), light sources (1) producing invisible (infrared or ultraviolet) light are installed on or around the venue. Image sensors of still picture cameras and camcorders appear to record and reproduce IR/UV light as visible light. The recordings being made are substantially disturbed by the additional light and of no further commercial value. Shielding of the light sources by malicious people is detected by IR/UV detectors (4). Failure to detect the disturbing light causes a control circuit (3) to issue a warning signal (5) or even interrupt the performance (6). Optionally, the light source may be relatively weak, but modulated with data (7) to facilitate forensic tracking or monitoring.

## Description

### FIELD OF THE INVENTION

The invention relates to a method of preventing the making of unauthorized recordings of events, such as photo or video recordings of visual events.

### BACKGROUND OF THE INVENTION

During events, such as the projection of (new) movies in a cinema, live concerts, exhibitions in a museum, etc., it is often not allowed for the visitors to make recordings (for example, photos or videos). However, enforcing these rules is not easy. It is common practice to illegally record the premiere of a new movie in the cinema or a musical in the theatre using a handheld video camera, and subsequently distribute copies thereof through the Internet. The quality is low, but the economical impact of illegal VHS-tapes, CD-Videos and DVDs can be enormous.

A potential solution of the problem of unauthorized recording of movies in the cinema is known from Applicant's International Patent Application WO-A 03/001813. This prior art document discloses watermarking of the content so as to enable subsequent tracking of time and/or location where the recording was made.

The prior art solution requires advance processing of the content and can thus not be applied to live performances and unalterable contents such as paintings. Moreover, the content has not substantially been affected. The recording still constitutes valuable content.

### OBJECT AND SUMMARY OF THE INVENTION

It is an object of the invention to provide an alternative method of protecting valuable content against piracy.

To this end, the method in accordance with the invention comprises the step of emitting disturbing signals from the venue of the event, which signals are substantially imperceptible for human visitors of the event, but recorded as perceptible signals.

Examples of such disturbing signals are infrared and ultraviolet light. The inventors have observed that the image sensors of electronic camera devices such as still picture cameras and video camcorders are sensitive to infrared and ultraviolet light. The camera devices record such disturbing light as visible light. Upon reproduction, the recorded disturbing signals are perceptible or at least detectable, and thus identify the material as being unauthorized. Also photographic material is not immune to all types of invisible light. However, the invention is not restricted to recording of visual events. Sensors and/or record carriers may become available, that record inaudible (e.g. subsonic) audio signals in the form of audible content.

Preferably, the intensity of the disturbing signals is such that the recorded material is overwhelmed thereby. This renders the recording worthless for viewing and further distribution.

An embodiment of the method in accordance with the invention further comprises the steps of detecting said disturbing signals in a neighborhood of the venue of the event, and interrupting the event if they are not detected. This prevents malicious people from adversely manipulating the signal sources, e.g. shielding the invisible light source(s). Such an embodiment is particularly useful in cinemas, where the play out server or projector is enabled to reproduce the material only if infrared and/or ultraviolet detector(s) located in the cinema detect that the invisible light is indeed radiated.

A further embodiment of the method according to the invention comprises the step of varying a property of the disturbing signals, for example, the intensity and/or wavelength of infrared and ultraviolet light. More particularly, variations of the wave length of invisible light make it difficult for a malicious person to make a constant quality recording by placing a simple infrared or ultraviolet filter in front of his recording device.

The variation may be a spatial or temporal variation. Advantageously, the variation is obtained by modulating a signal property in accordance with information about the event, such as time, location, or cinema operator. In such an embodiment, the signal source may be relatively weak. The recorded copy has still value (as it is not overwhelmed by disturbing signals), but the embedded information enables forensic tracking.

### BRIEF DESCRIPTION OF THE DRAWINGS

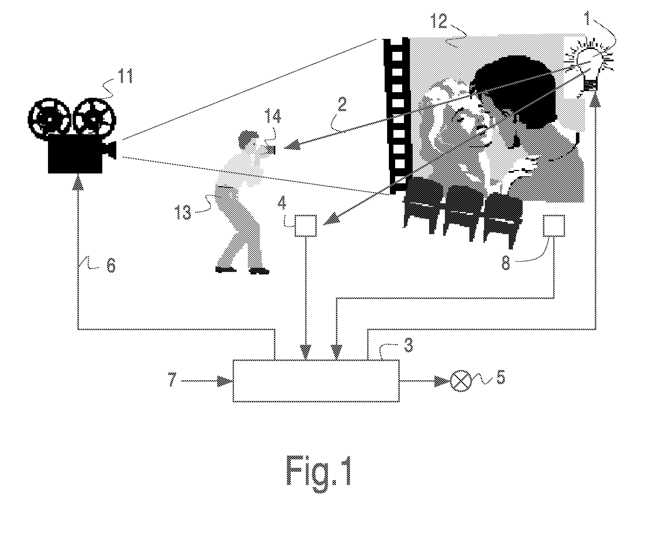

Fig. 1 shows, by way of example, the use of the method according to the invention in a cinema.

### DESCRIPTION OF EMBODIMENTS

The invention will now be described with reference to the example of preventing unauthorized recordings being made from cinema movies. It is to be understood, however, that the invention can also be used for preventing unauthorized recordings of live concerts, valuable paintings in musea, etc.

In Fig. 1, a cinema is shown comprising a cinema projector **11** and a projection screen **12.** The projector **11** may be a conventional 35mm projector or an electronic HDTV projector (beamer). The audience includes a person **13** using a handheld camcorder **14** to record the movie being projected on the screen **12.** In accordance with the invention, one or more infrared (IR) or ultraviolet (UV) light sources **1** are placed in the cinema. The light sources may be mounted in the ceiling or hidden in a flower box on the floor or stage. The light sources may also be mounted on the clothes of actors or other performers, or on valuable objects being exhibited.

In the Figure, the invisible light source **1** is positioned such that the radiated IR or UV light is in direct line of sight with the handheld camcorder **14** as illustrated by reference numeral **2.** It will be appreciated, however, that the light source may also be positioned such that it illuminates the object(s) or person(s) on stage, the reflections of the light subsequently being indirectly picked up by the camcorder. It is also possible to employ a light bulb in the projector **11** which emits sufficient additional invisible light.

The disturbing light source **1** is controlled by a control circuit **3**. In one embodiment of the invention, the control circuit is a simple power supply unit supplying sufficient energy to cause the light source to emit an 'overwhelming' amount of light on the sensor of camcorder **14.** The result thereof will be that the recording is worthless, because the IR/UV light is recorded and reproduced by the camcorder as visible light. The control circuit **3** may optionally control the disturbing light intensity as a function of the amount of ambient visible light being picked up by a sensor **8**. This allows an extra amount of disturbing light to be thrown to the camera **14** during dark scenes in the movie, so that a pretty mess is made of the recording, even if the camera is provided with IR/UV filters.

In order to prevent malicious people from shielding the light source **1** and thus circumventing the recording protection scheme, one or more IR/UV-light detectors **4** are placed in a neighborhood of the event location. The detectors **4** are coupled to the control circuit **3**. In response to detecting the absence of IR/UV-light, the control circuit **3** issues a information signal **5** to an operator, supervisor or the public. Alternatively, the control circuit controls the projector **11** (or any other play out server as the case may be) to stop its operation through a control line **6.**

In a preferred embodiment, a plurality of light sources emitting light having different wavelengths are alternately activated. In addition, the respective light intensities may be subjected to dynamic variations. This makes it difficult for a potential hacker to obtain a constant recording quality when he uses IR- and/or UV-filters.

In a further embodiment, the intensity or wave length of the light source **1** is modulated by the control circuit **3** in accordance with a predetermined data pattern **7**, for example, a time code, a code identifying the venue, an operator ID, etc.. In such an embodiment, it is not necessary for the light source to produce sufficient light to substantially ruin a recording. Although the copy has still a commercial value in such an embodiment, the information thus embedded in the copy allows forensic tracking or monitoring.

The invention can be summarized as follows. In order to prevent people from making unauthorized recordings of visual events (cinema movies, live concerts, museum exhibitions), light sources (1) producing invisible (infrared or ultraviolet) light are installed on or around the venue. Image sensors of still picture cameras and camcorders appear to record and reproduce IR/UV light as visible light. The recordings being made are substantially disturbed by the additional light and of no further commercial value. Shielding of the light sources by malicious people is detected by IR/UV detectors (4). Failure to detect the disturbing light causes a control circuit (3) to issue a warning signal (5) or even interrupt the performance (6). Optionally, the light source may be relatively weak, but modulated with data (7) to facilitate forensic tracking or monitoring.

## Claims

1. A method of preventing making unauthorized recordings of events, comprising the step of emitting disturbing signals from the venue of the event, which signals are substantially imperceptible for human visitors of the event, but recorded as perceptible signals.

2. A method as claimed in claim 1, wherein said disturbing signal is infrared light.

3. A method as claimed in claim 1, wherein said disturbing signal is ultraviolet light.

4. A method as claimed in claim 1, further comprising the steps of detecting said disturbing signals in a neighborhood of the venue of the event, and interrupting the event if the disturbing signals are not detected.

5. A method as claimed in claim 1, further comprising the step of varying a property of the disturbing signals.

6. A method as claimed in claim 5, wherein said step of varying comprises modulating said property with information about the event.

7. A method as claimed in claim 5, wherein said property is the intensity of disturbing light.

8. A method as claimed in claim 5, wherein said property is the wavelength of disturbing light.

9. A method as claimed in any one of the preceding claims, wherein the event is the projection of an image or sequence of images by a projector, the light source of said projector being adapted to additionally radiate disturbing light.
